# EUROPEAN PATENT APPLICATION

(11) **EP 2 458 808 A1**
(43) Date of publication of application: **30.05.2012**
(21) Application number: 10306326.9
(22) Date of filing: 30.11.2010
(51) Int. Cl.: H04L 29/06, H04W 8/18, H04L 29/12

(54) **Method for accessing a secure element and corresponding secure element and system**

(71) Applicant: Gemalto SA, 92190 Meudon (FR)
(72) Inventor: Amiel, Patrice, 13290, AIX-LES-MILLES (FR); Berard, Xavier, 13950, CADOLIVE (FR); Valles, Gregory, 13011, MARSEILLE (FR)

(57) **Abstract**

The invention relates to a method (20) for communicating information.

According to the invention, a first device (14) being coupled to the secure element (12), the method comprises the following steps:
- the secure element sends to the first device a secure element identifier (22);
- the first device and/or another device (162), as second device, connected to the first device sends to a third device (18) at least one message (24, 26) comprising the secure element identifier and a communication network subscription identifier, as paired data; and
- the third device stores the paired data.
The invention also relates to corresponding secure element and system.

## Description

### Field of the invention:

The invention relates, in a general manner, to a method for accessing a secure element.

Within the present description, a secure element, also termed token infra, is an electronic object that is intended to, on the one hand, communicate data with the outside world and, on the other hand, carry out preferentially at least one security operation, such as a protection of the data that it stores.

Furthermore, the invention also pertains to a secure element for accessing the secure element.

Finally, the invention relates to a system for accessing a secure element.

### State of the art:

A known solution for accessing a Subscriber Identity Module (or SIM) type card, as secure element, is based upon a use of an International Mobile Subscriber Identity (or IMSI) identifying the SIM type card that stores it.

However, such a known solution does not allow addressing a secure element when no IMSI is stored within the secure element.

Thus, there is a need to access the secure element notably when the secure element does not store any IMSI.

### Summary of the invention:

The invention proposes a solution for satisfying the just hereinabove specified need by providing a method for accessing a secure element.

According to the invention, a first device being coupled to the secure element, the method comprises the following steps. The secure element sends to the first device a secure element identifier. The first device and/or another device, as second device, connected to the first device, sends to a third device at least one message comprising the secure element identifier and a communication network subscription identifier, as paired data. And the third device stores the paired data.

The principle of the invention consists in a transmission, to a third device, of data identifying a token, from the token cooperating with a first device, through this latter and/or a second device connected hereto, completed by data for identifying a communication network subscription before being registered, as associated data, by the third device.

At least one of the first device and/or the second device connected to the first device completes the token identifier by specifying data for identifying a communication network subscription.

The first device and/or the second device constitute(s) an intermediary entity(ies) between the token, at the root of a transmission of the token identifier, and the third device, as an addressee of the associated data including the token identifier.

Due to an association of data describing a path for reaching the concerned token, the invention method allows accessing the token.

The token user does not need to be involved apart from carrying the token. The invention method is therefore convenient for the user.

According to an additional aspect, the invention is a secure element for accessing the secure element.

According to the invention, the secure element is adapted to send a secure element identifier.

The secure element or token may have different form factors.

According to still an additional aspect, the invention is a system for accessing a secure element.

According to the invention, a first device being coupled to a secure element, the system comprises the first device, the secure element and at least one other device. The secure element is adapted to send to the first device a secure element identifier. The first device and/or another device, as second device, connected to the first device, is adapted to send to a third device at least one message comprising the secure element identifier and a communication network subscription identifier, as paired data. And the third device is adapted to store the paired data.

### Brief description of the drawings:

Additional features and advantages of the invention will be more clearly understandable after reading a detailed description of one preferred embodiment of the invention, given as one indicative and non-limitative example, in conjunction with the following drawings:

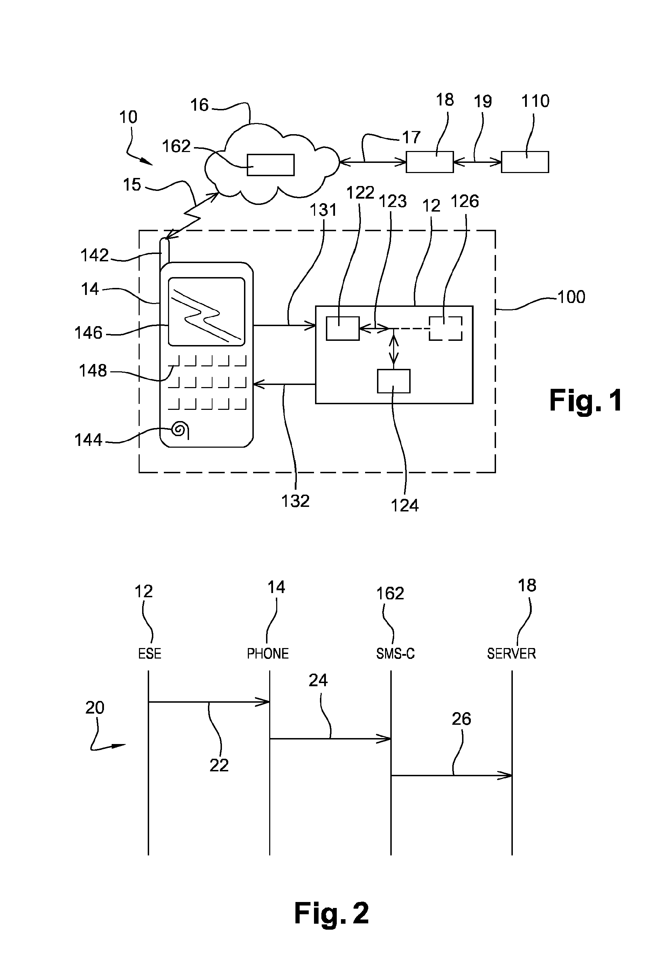

   - Figure 1 illustrates a simplified diagram of one exemplary embodiment of a system comprising a chip, as token, a terminal, as first device, a communication network entity, as second device, and a server, as third device, the system being adapted to automatically transfer to the third device associated data for identifying the token and a communication network subscription, according to the invention; and
   - Figure 2 represents an example of a flow of messages exchanged between the token, the first, second and third devices of the system of figure 1, so that at least the third device is able to access the token thanks to the transferred associated data.

### Detailed description:

Herein under is considered an Embedded Secure Element, as a chip soldered, possibly in a removable manner, on a Printed Circuit Board (or PCB) of a host device and an invention token.

Instead of being constituted by an Embedded Secure Element, the token may be constituted by a card, for example, a Multi-Media type Card (or MMC), a Secure Memory Card (or SMC), a removable Secure Digital card (or SD), a removable micro-SD, a dongle, for example of the Universal Serial Bus (or USB) type, and/or any other electronic medium that may have different form factors.

Naturally, the herein below described embodiment is only for exemplifying purposes and is not considered to reduce the scope of the present invention.

Figure 1 shows schematically a system 10 for accessing an Embedded Secure Element 12.

The system 10 includes an Embedded Secure Element 12, a mobile telephone 14, as terminal, a Short Message Service Center 162 and an Over-The-Air (or OTA) server 18.

For a sake of clarity and conciseness, the Embedded Secure Element 12, the mobile telephone 14, the Short Message Service Center 162 and the OTA server 18 are termed hereinafter the ESE 12, the phone 14, the SMS-C 162 and the server 18 respectively.

Instead of being constituted by a phone, the terminal may be constituted by, for example, a smart phone (i.e. a mobile phone with a Personal Digital Assistant (or PDA) capability), a set-top box, a Personal Computer (or PC), a tablet computer, a desktop computer, a laptop computer, a media-player, a game console, a netbook and/or a PDA.

Naturally, the herein below described embodiment is only for exemplifying purposes and is not considered to reduce the scope of the present invention.

The phone 14, as host device, may accommodate a plurality of secure elements. For example, the phone 14 is coupled to, besides to the ESE 12, at least one SIM type card (not represented), such as a SIM card, a UICC (acronym for Universal Integrated Circuit Card) card, a CSIM (for CDMA Subscriber Identity Module) card, a USIM (for Universal Subscriber Identity Module) card, a RUIM (for Removable User Identification Module) card, a ISIM (for Internet protocol multimedia Services Identity Module) card and/or the like.

For simplicity reasons, only one communicating system 100 that comprises the phone 14 and one ESE 12 has been represented.

The phone 14 is able to exchange data, via a first antenna 142, through a long range radiofrequency link 15, with at least one mobile radio-communication network 16.

The phone 14 is preferably equipped with an Near Field Communication (or NFC) chip (not represented) and a second antenna 144. The second antenna 144 is connected to the NFC chip.

The NFC chip enables the communicating system 100, to access, through a contact-less link (not represented), an external NFC communicating device, such as a smart card or a reader (not represented).

Within the present description, the adjective "contact-less" used before the term "link" means notably that the NFC chip communicates with an external device via a short range radio-frequency link by using, for example, International Organization Standardization / International Electrotechnical Commission (or ISO/IEC) 14 443 specifications, a Ultra High Frequency RadioFrequency IDentification (or UHF RFID) technology or the like.

The short range radiofrequency is, for example, 13,56 MHz.

The ESE 12, as secure element, is preferably coupled to the NFC chip.

The secure element may be a portable device and, as such, be removed from the phone 14 and coupled to another host computer, such as another mobile telephone.

The ESE 12 stores and carries out preferably one or several security functions.

The security functions may include a user authentication process to be used, in order to access data and/or an application(s) managed by the ESE 12 and/or the server 18 to be addressed.

To authenticate the user, the ESE 12 may store an application for verifying a Personal Identity Number (or PIN). The PIN is securely stored within the chip memory 122 and to be input by an ESE 12 user. The ESE 12 compares input data with the stored PIN and, when the input data matches the stored PIN, authorizes a running of the application.

The security functions include preferentially an encryption/decryption process. The encryption/decryption process is to be used for exchanging data, through the phone 14, with the server 18. Before sending any data, the data is encrypted with a key and an encryption algorithm.

The algorithms for encrypting/decrypting data are shared between the ESE 12 and the server 18.

The encryption/decryption process is to be used before sending, through the phone 14, to the server 18, data and after receiving, through the phone 14, from the server 18 data respectively, so as to protect an access to the data thus exchanged.

The ESE 12 is coupled, through wire and/or wireless links, to the phone 14.

The wire and/or wireless link(s) consist(s) of a mono-directional communication link 131, as an input link, and another mono-directional communication link 132, as a separate output link with respect to the ESE 12.

Alternately, instead of two mono-directional communication links, the ESE 12 exchanges data, through a unique bi-directional communication link, with the phone 14.

The communication between the ESE 12 and the phone 14 is notably used for benefiting from, at the phone 14 side, an NFC capability of the ESE 12, and, at the ESE 12 side, a capability of access (from the phone 14) to the server 18, and/or the MMI of the phone 14, to let a phone user experience any data managed by or through the ESE 12.

The ESE 12 includes a chip.

The ESE 12 is a non-SIM type chip, such as a non-SIM chip, a non-CSIM chip, a non-ISIM chip, a non-UICC chip, a non-USIM chip, a non-RUIM chip or the like, i.e. does not store any IMSI.

The ESE chip comprises at least one memory 122 and at least one Input/Output (or I/O) interface 124 for communicating with the exterior of the ESE 12, which are all linked together through a control and data bus 123.

The chip memory 122 can be constituted by one or several EEPROM (acronym for "Electrically Erasable Programmable Read-Only Memory"), one or several ROM (acronym for "Read Only Memory"), one or several Flash memories, and/or any other memory(ies) of different types, like one or several RAM (acronym for "Random Access Memory").

The chip memory 122 stores, preferably in a secure manner, data relating to a unique identifier of the secure element, such as a serial number, like an Integrated Circuit Card IDentifier (or ICCID), as an identifier of the secure element. The identifier of the secure element is tied to the ESE 12.

The ESE chip comprises preferably at least one microprocessor 126 (as optional means represented by a dotted line), as means for processing data.

The chip memory 122 stores preferably, besides an Operating System (or OS), at least one application accessible through the NFC chip, also termed NFC application.

The chip memory 122 stores preferentially an application algorithm relating to a process, according to the invention, for accessing the secure element, also termed the ESE identity informer at the ESE side.

The application algorithm allows generating and sending automatically one (or several) message(s) for requesting the phone 14 to send a message(s) along with the identifier of the secure element, as information specific to the ESE 12, and possibly additional information.

Alternately, instead of being sent at an initiative of the ESE 12, the identifier of the secure element of the ESE 12 is read from the phone 14, i.e. at the phone 14 initiative. The phone 14 is preferably an entity authorised by the ESE 12. For example, the phone 14, as reading entity, has to submit a key for accessing the ESE 12, as reading rights of data stored within the chip memory 122, so as to fetch the identifier of the secure element that is stored within the chip memory 122.

The ESE identity informer allows informing about a presence of the ESE 12 to the phone 14 (more exactly an application executed by the phone 14) and the server 18 (more exactly an application executed by the server 18).

The ESE identity informer may be written in an object-oriented language, such as Java, also termed applet when developed in Java. According to such a corresponding embodiment, the chip memory 122 stores a Java Virtual Machine (or JVM) that interprets and executes the applet.

As additional information, the chip memory 122 stores, preferably in a secure manner, an identifier of the server 18, as an addressee of the message(s) to be sent from the ESE 12, as an originator of the message(s) to be sent.

The identifier of the server 18 may be constituted by an Uniform Resource Identifier (or URI), an Uniform Resource Locator(s) (or URL), an Internet Protocol (or IP) address and/or a phone number.

The chip microprocessor 126 controls and communicates with all the components of the ESE 12 chip, such as the chip memory 122 to read it and possibly write into it.

The chip microprocessor 126 controls a data exchange, through the I/O interface 124, with outside of the chip, notably the phone 14 and the server 18.

The chip microprocessor 126 executes preferably the NFC application(s), so as to offer to an ESE 12 user corresponding NFC service(s). The NFC service(s) may encompass a transport service(s), a wallet service(s), a mobile banking service(s), and/or any other service accessible through an NFC type communication technology.

The chip microprocessor 126 executes preferentially, besides the OS, the ESE identity informer for sending automatically, through the phone 14, to the server 18 one (or several) message(s) based upon information stored within the chip memory 122.

The chip I/O interface 124 is used for receiving data from and sending data to outside, namely the NFC chip, the phone 14, and, through the corresponding phone I/O interface and the mono-directional communication links 131 and 132, the server 18.

The chip I/O interface 124 may include an International Organization for Standardisation (or ISO) 7816 type interface, a Secure Digital (or SD) type interface or an Application Protocol Data Unit (or APDU) type interface, so as to let communicate the ESE 12 and the phone 14 in at least one of the two directions, i.e. from the ESE 12 to the host device and/or from the host device to the ESE 12.

The chip I/O interface 124 may comprise another or other communication channel(s), such as an Internet Protocol (or IP), a Mass Storage and/or a Universal Serial Bus (or USB) communication channel(s).

The chip I/O interface 124 includes an output interface using preferably a Host Controller Interface (or HCI), as high level protocol, i.e. a protocol used for exchanging from an application run by the chip microprocessor 126 to an application run by a host device microprocessor (not represented).

According to the invention, the message(s) to be sent by the ESE 12 includes at least the identifier of the ESE 12, as secure element identifier and content of the message(s).

The content of the message(s) may be encrypted by using data, such as a public key relating to the server 18 and a data encryption algorithm, shared with the server 18.

Preferably, the ESE 12 signs the content of the message(s) to be sent by using stored data, such as a (symmetric) key and a data encryption algorithm, shared with the server 18. Such a signature allows ensuring that the message(s) originate(s) from the ESE 12.

The ESE 12 is intended to interact with the phone 14, so as to send, through this latter, to the server 18, a message(s) encompassing at least data for identifying the ESE 12.

The phone 14 includes at least one microprocessor (not represented), at least one memory (not represented) and at least one I/O interface (not represented).

The phone I/O interface includes a radio interface connected to the first antenna 142 for exchanging data, through the long range radiofrequency link 15, via the mobile radio-communication network 16, with the server 18.

The phone I/O interface comprises prefer ably a display screen 146, a keyboard 148, and a phone loudspeaker (not represented), as Man Machine Interface (or MMI).

The phone I/O interface also includes an I/O interface with the ESE 12.

The phone input interface with the ESE 12, as an interface allowing to be accessed from the ESE 12, may be an HCI, an ISO, and/or a SD type interface(s).

The phone output interface with the ESE 12 may be a slot, as specified within Java Specification Requests (or JSR) 177, an Application Programming Interface (or API), an International Organization for Standardization (or ISO) type interface and/or a Secure Digital (or SD) type interface. The phone output interface may be identified by a number relating to the concerned interface, such as a slot number, as a phone output interface identifier. The phone output interface identifier allows accessing the ESE 12 from the phone 14.

The phone microprocessor processes data originating from and/or intended to any internal component and data originating from and/or any external device through the phone I/O interface.

The phone microprocessor executes, besides an OS, an application, also termed hereinafter ESE presence informer, for sending to the server 18 a message(s) comprising data originating from the ESE 12.

Such a message(s) consists, in a preferred embodiment, of a Short Message Service (or SMS) and/or a Multimedia Message Service (or MMS) type message(s).

An execution of the ESE presence informer is preferably triggered by a reception of a message originating from the ESE 12, and, more exactly, from the ESE identity informer, as an application supported by the ESE 12.

The ESE presence informer forwards to the mobile radio-communication network 16 the identifier of the ESE 12 originating from the ESE 12.

The ESE presence informer may insert additional information stored within the phone memory within a message or another message to be addressed to the server 18 with the identifier of the ESE 12.

When the ESE presence informer addresses a lower level process supported by the phone 14 before sending the message(s) to the server 18, the low level process may add additional information.

The ESE presence informer allows thus forwarding, through the mobile radio-communication network 16, to the server 18 information originating from the ESE 12 and possibly inserting additional information.

As additional information, there may be a phone output interface identifier.

As additional information, there may be a Mobile Subscriber Integrated Services Digital network Number (or MSISDN), an IMSI and/or other communication network subscription identifier.

The mobile radio-communication network 16 may include a GSM (acronym for "Global System for Mobile communications"), a UTRAN (for "UMTS Terrestrial Radio Access Network"), an EDGE (for "Enhanced Data Rates for GSM Evolution"), a GPRS (for "General Packet Radio System"), a WLAN (for "Wide Local Area Network"), a UMTS (for "Universal Mobile Telecommunications System"), a CDMA (for "Code Division Multiple Access"), a LTE (for "Long Term Evolution") and/or an IP Multimedia Subsystem (for IMS) network(s).

The mobile radio-communication network list is not exhaustive but only for exemplifying purposes and is not considered to reduce the scope of the present invention.

The mobile radio-communication network 16 comprises, among others, a Home Location Register (or HLR) (not represented) or the like and a SMS-C (for SMS-Center) 162, as a network entities, and/or the like.

The HLR is connected to the SMS-C 162.

The HLR includes a central database that contains information relating to a user authorized to use the mobile radio-communication network 16.

The central database is used as a reference database for other network entity, such as a Visitor Location Register.

The HLR, as an intermediary network entity, receives, from either the phone 14 or another intermediary network entity, an IMSI or a derived IMSI also termed temporary IMSI, as an identifier assigned to the communicating system 100 within a Signalling System 7 (or SS7), as a signalling layer of the GSM mobile radio-communication network 16.

Based upon the IMSI or derived IMSI, the HLR retrieves a corresponding MSISDN, as data associated with the identifier of the ESE 12 thanks to the assigned IMSI or derived IMSI.

The HLR assigns to a content of the message received from the ESE 12 and the phone 14.

The HLR forwards notably to the SMS-C 162, besides the ESE identifier, at least one of a corresponding IMSI (or derived IMSI) and a corresponding MSISDN, as communication network subscription identifier(s), within a message to be forwarded to the server 18. The server 18 is identified through one identifier received from ESE 12.

The HLR adds within the content of the message to be forwarded to the server 18, as further data, one or several communication network subscription identifiers. Such an data adding of the HLR allows linking, on the one hand, the ESE identifier originating from the ESE 12, with, on the other hand, the corresponding further communication network subscription identifiers to be delivered, through the SMS-C 162, to the server 18.

The SMS-C 162 is a particular intermediary element between the ESE 12 and the server 18 which delivers an SMS type message to a destination entity, such as the server 18 or the ESE 12.

The SMS-C 162 is used notably for forwarding a SMS and/or MMS type message to the server 18 when the SMS type message is received from the ESE 12 through the phone 14.

The mobile radio-communication network 16 is linked, via a bi-directional wired line 17, to the server 18.

The server 18 may be operated or managed by a Mobile Network Operator (or MNO), a Mobile Virtual Network Operator (or MVNO), a banking Operator, a wire communication network operator, any service Operator or on behalf of a service Operator, as a service provider.

The server 18 may be a server that also administrates a fleet of tokens.

The server 18 is connected, through a bi-directional link 19, to a memory 110.

The memory 110 stores a database relating to data pertaining to at least one secure element, such as one or several ESEs, among which there is the ESE 12, one or several SMCs, one or several SDs, one or several MMCs, one or several micro-SDs and/or other secure element(s) of other type(s).

The server 18 is dedicated to managing the database.

The server 18 is used for registering a list of at least one identifier relating to the ESE 12 associated with at least one communication network subscription identifier, as associated data, so as to address properly the ESE 12 by using the associated data.

As associated data, there may be preferably a phone output interface identifier provided by the phone 14, so that notably the phone 14, as ESE 12 host, knows precisely how and which token is to be addressed.

The server 18 has to be preferably accessed via an initiation from either the ESE 12 or the phone 14.

Optionally, the server 18 executes one or several security functions.

The security functions include preferentially an authentication of a user of the ESE 12. During a configuration phase, the user of the ESE 12 enters data to be used as reference data for authenticating herself/himself. For example, the user gives either a Personal Identification Number (or PIN), such as four digits, or a biometric reference, such as a fingerprint or an iris image, as a code to be recognized and used for accessing an application to be executed by the server 18. The PIN or the biometric reference to be matched is stored at the server 18.

The security functions may comprise a decryption/encryption process to be used for exchanging with the ESE 12, so as to protect an access to the data thus exchanged between the server 18 and the ESE 12.

The content of a message originating from ESE 12 is decrypted by using data, such as a private key relating to the server 18 and a data decryption algorithm.

Preferably, the server 18 stores a (symmetric) key shared with the ESE 12 and a data decryption algorithm, so as to be able to ensure that the content of the message, namely at least an identifier of the ESE 12, originate(s) from the ESE 12, as a message signed by the ESE 12.

The server 18 is thus able, via the phone 14, to target, at any time, over the air, the ESE 12. In particular, the server 18 knows the mobile communication network identifier(s) associated with the ESE identifier and that is(are) to be used to reach the ESE 12 over the air.

Thus, if a mobile communication network identifier(s) change(s) during a life of the ESE 12, then the server 18 is aware of a current mobile communication network identifier(s) associated with the ESE identifier.

The change of the mobile communication network identifier(s) may be due to, for example, either a removal of the ESE 12 from a first host to a second host hosting preferably another SIM type token, or a replacement of the SIM type token hosted by the phone 14 by another SIM type token.

Figure 2 depicts an example of a message flow 20 that involves the ESE 12, the phone 14, the SMS-C 162 and the server 18.

It is assumed that ESE 12 has just been powered.

The ESE 12 powering launches automatically an execution of the ESE identity informer by the ESE 12.

The ESE 12 sends to the phone 14, through the ESE chip output interface 132, a message 22 for registering the ESE 12, like a command for sending another message, such as "SEND SMS", with, as message parameters, preferably an identifier of the server 18, as an addressee of the message to be sent and, an ICCID, as an identifier of the ESE 12, as a content of the message to be sent.

The phone 14 (and more exactly to the ESE presence informer) receives the message 22 and interprets it.

Thus, the phone 14 sends, through the HLR, to the SMS-C 162, another message 24 for registering the ESE 12, like an SMS, while specifying the server 18, as addressee of a content of the message 24.

A content of the message 24 for registering the ESE 12 encompasses, within the contents of the message the identifier of the ESE 12 and possibly the phone output interface identifier, as other data stored within the phone memory allowing to access the ESE 12, and preferably within a header of the message a MSISDN, an IMSI, as mobile communication network identifier(s), and/or other data stored within at least one network entity.

Such a message 24 for registering the ESE 12 constitutes a request for registering the ESE 12 by assigning it, as associated or paired data, the identifier of the ESE 12 along with the mobile communication network identifier(s) and the possible other data retrieved by the phone 14 to access the ESE 12.

The SMS-C 162 sends to the server 18, another message 26 for registering the ESE 12, like an SMS, while specifying the server 18, as addressee of a content of the message 26, and forwarding the content of the received message 24 for registering the ESE 12.

The server 18 executes an application for registering data associated with the ESE 12.

The server 18 allows saving within the database stored within the memory 110 at least the identifier of the ESE 12 associated with the mobile communication network identifier(s) and the possible other data retrieved by the phone 14 to access the ESE 12, as registered data.

The server 18 may send back to the ESE 12 a message (not represented) for confirming a registration of the ESE 12 at the server 18 side.

The ESE 12 may be configured to send again the original message 22 while the ESE 12 does not receive such a confirmation message. Such a re-sending of the message 22 allows ensuring that the server 18 knows information enabling it to address, through the phone 14, the ESE 12.

The server 18 may send a message to another external entity, like another server, that is connected to the mobile radio-communication network 16 and/or through an Internet network, for notifying it with the registered data. Such other entity may send to the ESE 12 a command, like a command for blocking any execution of an NFC service supported by the ESE 12, and/or data, such as advertising data relating to an NFC service supported by the ESE 12.

A lot of amendments of the embodiment described supra may be brought without departing from the spirit of the invention. For example, instead of being at the initiative of the ESE 12, the phone 14 sends, possibly further to a message (not represented) received from the server 18, to the ESE 12 a message (not represented) to request this latter to notify the server 18, through a message 22 with data for identifying the ESE 12.

## Claims

1. A method (20) for accessing a secure element,
**characterized in that**, a first device (14) being coupled to the secure element (12), the method comprises the following steps:
- the secure element sends to the first device a secure element identifier (22);
- the first device and/or another device (162), as second device, connected to the first device sends to a third device (18) at least one message (24, 26) comprising the secure element identifier and a communication network subscription identifier, as paired data; and
- the third device stores the paired data.

2. Method according to claim 1, wherein a mobile communication network entity (16), as second device, being connected, through a communication network, to the first device, the method comprises the following steps:
- the secure element sends to the first device a secure element identifier;
- the first device sends to the second device at least one message (24) comprising the secure element identifier;
- the second device sends to the third device at least another message (26) comprising the secure element identifier and a communication network subscription identifier, as paired data; and
- the third device stores the paired data.

3. Method according to claim 1 or 2, wherein the third device includes a server.

4. Method according to any of claims 1 to 3, wherein at least the secure element identifier is encrypted before being sent to the third device.

5. Method according to any of claims 1 to 4, wherein, the first device being coupled, through at least one interface (131, 132), to the secure element, the method comprises the following steps:
- the secure element sends to the first device a secure element identifier;
- the first device sends to the second device at least one message (24) comprising a first device interface identifier and the secure element identifier;
- the second device sends to the third device at least one message (26) comprising the first device interface identifier, the secure element identifier and a communication network subscription identifier, as paired data; and
- the third device stores the paired data.

6. Method according to any of claims 1 to 5, wherein the first device comprises a mobile terminal and the communication network subscription identifier includes a Mobile Subscriber Integrated Services Digital network Number and/or an International Mobile Subscriber Identity.

7. Method according to any of claims 1 to 6, wherein the secure element comprises at least one element comprised within a group comprising:
- an Embedded Secure Element;
- a Secure Memory Card;
- a removable Secure Digital card;
- a removable micro-Secure Digital card.

8. Method according to any of claims 1 to 7, wherein the secure element comprises at least one application accessible through a Near Field Communication type chip, the secure element being coupled to the Near Field Communication type chip.

9. A secure element (12) for accessing the secure element,
**characterized in that** the secure element is adapted to send a secure element identifier (22).

10. A system (10) for accessing a secure element (12),
**characterized in that** a first device (14) being coupled to a secure element (12), the system comprises the first device, the secure element and at least one other device (162),
**in that** the secure element is adapted to send to the first device a secure element identifier (22);
**in that** the first device and/or another device, as second device, connected to the first device is adapted to send to a third device (18) at least one message (24, 26) comprising the secure element identifier and a communication network subscription identifier, as paired data; and
**in that** the third device is adapted to store the paired data.
